# EUROPEAN PATENT APPLICATION

(11) **EP 4 621 384 A1**
(43) Date of publication of application: **24.09.2025**
(21) Application number: 23897680.7
(22) Date of filing: 24.11.2023
(51) Int. Cl.: G01N 21/21, G01B 11/26, G01N 21/88, G02B 5/30, G03B 15/00

(54) **ILLUMINATION LIGHT RECEPTION DEVICE**

(30) Priority: 28.11.2022 JP 2022189415
(71) Applicant: CCS Inc., Kyoto-shi, Kyoto 602-8011 (JP); University of Hyogo, Kobe-shi, Hyogo 651-2197 (JP)
(72) Inventor: YOSHIMURA, Norihisa, Kyoto-shi, Kyoto 602-8011 (JP); YOSHIKI, Keisuke, Kobe-shi, Hyogo 651-2197 (JP)
(74) Representative: Müller Hoffmann & Partner
(86) International application number: PCT/JP2023/042148
(87) International publication number: WO 2024/117032

(57) **Abstract**

An illumination light reception device according to the present invention includes a wave plate, a polarization selection optical element, a light reception element, a light source, an illumination optical system, and an imaging optical system. In the wave plate, a first region for producing a phase difference of a half wavelength and a second region having no polarization changing function are concentric with each other and at least one first boundary of the first region is shared with a second boundary of the second region. The wave plate is disposed, with respect to a target object, closer to a first position of the light source and closer to a second position of the light reception element. The polarization selection optical element is disposed, with respect to the wave plate, closer to the second position than the first position. Respective optical axes of the illumination optical system and the imaging optical system are coaxial with each other.

## Description

### Technical Field

The present invention relates to an illumination light reception device that illuminates a predetermined target object and receives reflected light from the predetermined target object.

### Background Art

As an example of an illumination light reception device that illuminates a predetermined target object and receives reflected light from the predetermined target object, for example, there is a sample measurement device disclosed in Patent Literature 1. The sample measurement device disclosed in Patent Literature 1 is a sample measurement device including a light source, a light reception element that receives light output from the light source, and an optical element that is disposed closer to the light source than the light reception element and selectively extracts, out of incident light, light of a polarization component in a specific direction. The sample measurement device includes both a specific polarizing element that is disposed closer to the light source than a measurement target sample and transmits or reflects light output from the light source, and a specific polarizing element that is disposed closer to the light reception element than the measurement target sample and transmits or reflects light that has been transmitted through or has been reflected from the measurement target sample. The specific polarizing element is a transmissive or reflective polarizing element having an x-axis direction and a y-axis direction perpendicular to the x-axis direction in a plane and having a Jones matrix that differs depending on an in-plane position.

The specific polarizing element has, for example, a structure in which a liquid crystal is sandwiched between glass plates, and thus, reflection due to the glass plates and the liquid crystal occurs. The reflected light generated inside the specific polarizing element is difficult to remove in front of the light reception element because its polarization has been changed, and thus, becomes stray light (noise), resulting in a decrease in an SN ratio in the light reception element.

### Citation List

### Patent Literature

Patent Literature 1: WO 2021/039900 A1

### Summary of Invention

The present invention has been made in view of the above-described circumstances, and an object of the present invention is to provide an illumination light reception device capable of improving an SN ratio in a light reception element.

An illumination light reception device according to the present invention includes a wave plate, a polarization selection optical element, a light reception element, a light source, an illumination optical system, and an imaging optical system. The wave plate has one or more first regions for producing a phase difference of a half wavelength and one or more second regions having no polarization changing function, and is disposed, with respect to a target object, closer to a first position where the light source is disposed and closer to a second position where the light reception element is disposed. The one or more first regions and the one or more second regions are formed to be concentric with each other and such that at least one first boundary in the one or more first regions is shared with a corresponding second boundary in the one or more second regions. The polarization selection optical element is disposed, with respect to the wave plate, closer to the second position than the first position. A first optical axis of the illumination optical system and a second optical axis of the imaging optical system are coaxial with each other.

The above and other objects, features, and advantages of the present invention will become apparent from the following detailed description and the accompanying drawings.

### Brief Description of Drawings

FIG. 1 is a schematic diagram for describing a configuration of an illumination light reception device according to an embodiment.
FIG. 2 is a diagram for describing a wave plate of the illumination light reception device.
FIG. 3 is a diagram for describing actions and effects of the illumination light reception device.
FIG. 4 is a diagram for describing a comparative example.
FIG. 5 is a diagram for describing a modified embodiment of the illumination light reception device.
FIG. 6 is a diagram for describing, as an example, application of the illumination light reception device to an inclination measuring device.

### Description of Embodiments

Hereinafter, one or more embodiments of the present invention will be described with reference to the drawings. However, the scope of the invention is not limited to the disclosed embodiments. Note that throughout the drawings, constituent components denoted by the same reference signs indicate the same constituent components, and descriptions thereof will be appropriately omitted. In the present specification, constituent components to be collectively referred to will be denoted by reference numerals and signs with suffixes omitted, and constituent components to be individually referred to will be denoted by reference numerals and signs with suffixes.

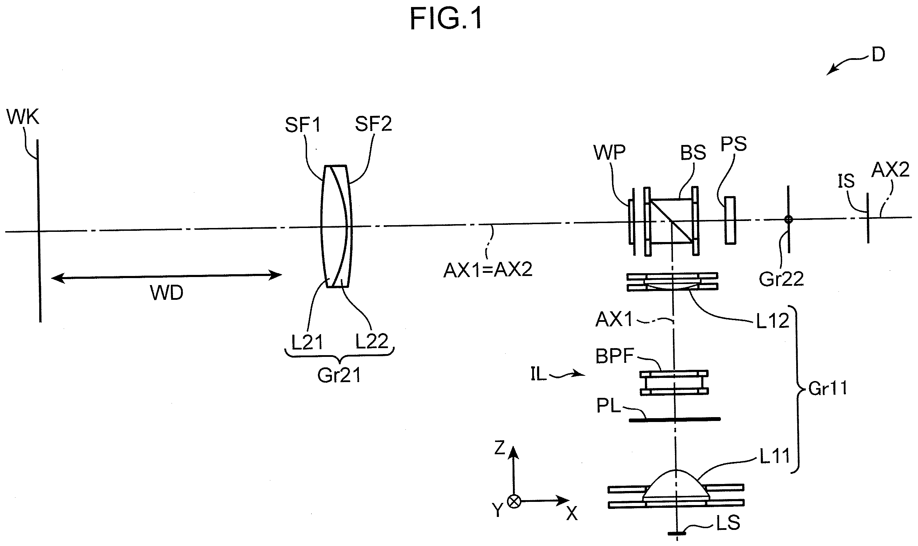

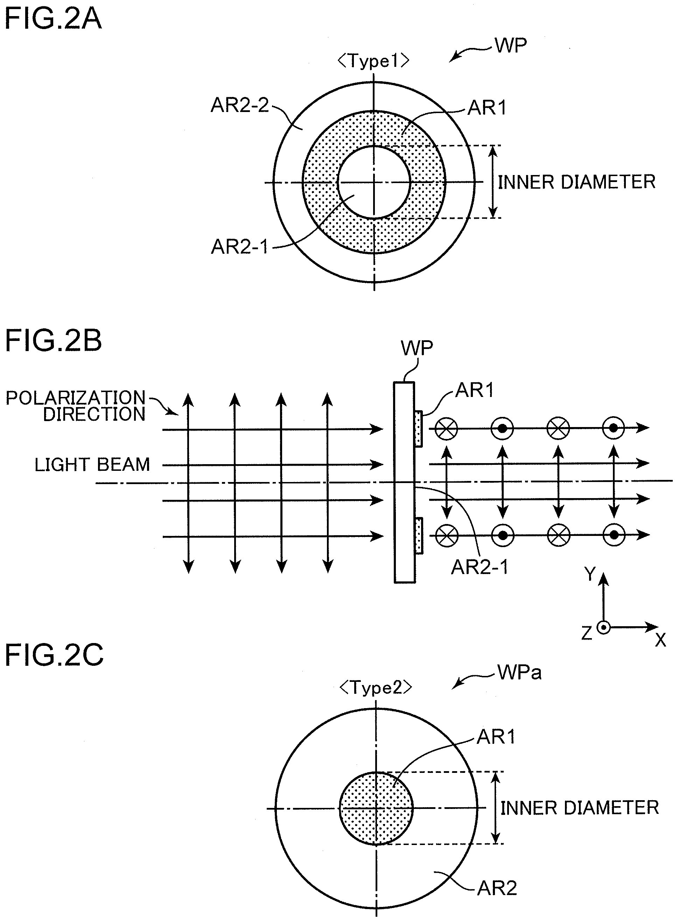

FIG. 1 is a schematic diagram for describing a configuration of an illumination light reception device according to an embodiment. FIG. 1 is a sectional view of an illumination light reception device D taken along a plane including different optical axes. FIG. 2 is a diagram for describing a wave plate of the illumination light reception device. FIG. 2A is a front view of the wave plate, and FIG. 2B is a diagram for describing actions and effects of the wave plate. FIG. 2C is a diagram for describing a modified embodiment of the wave plate.

The illumination light reception device D according to the embodiment is a device that illuminates a predetermined target object (workpiece) WK and receives reflected light from the predetermined target object, and includes, for example, as illustrated in FIG. 1, an illumination unit IL, a beam splitter BS, a wave plate WP, a first optical system Gr21, a polarization selection optical element PS, a second optical system Gr22, and a light reception element IS. The predetermined target object WK is any object and is not limited.

The illumination unit IL is a device that directs illumination light toward the predetermined target object WK disposed on a predetermined disposition surface, and includes, for example, a light source LS, a polarizer PL, a bandpass filter BPF, and an optical system Gr11.

The light source LS is a device that is supplied with power from a predetermined power supply and emits predetermined light, and includes, for example, a light emitting diode (LED) that emits randomly polarized light.

The polarizer PL is an optical element that selectively extracts a polarization component in a predetermined direction and outputs the extracted polarization component as output light.

The bandpass filter BPF is an optical element that transmits light of a predetermined wavelength range in incident light, outputs the transmitted incident light as output light, and blocks light other than the light of the wavelength range in the incident light. The wavelength range is preferably as narrow as possible, and monochromatic light is preferably output from the bandpass filter BPF.

The optical system Gr11 causes condensed light to be made incident on the beam splitter BS, and includes, for example, two first and second lenses L11 and L12. The first lens L11 collimates the incident light into parallel light and outputs the parallel light as output light, and the second lens L12 condenses the incident light and outputs the condensed light as output light.

The beam splitter BS is an optical element that splits the incident light into two light rays at a predetermined split ratio and outputs the two light rays, at a wavelength of illumination light. The beam splitter BS may be of a so-called plate type or a thin film form, but in the example illustrated in FIG. 1, is of a so-called cube type. The beam splitter BS of the cube type is formed in a substantially cubic shape with two right-angle prisms bonded to each other on their inclined surfaces, and the inclined surface of one of the right-angle prisms is covered (coated) and formed with a dielectric multilayer film for splitting incident light.

The wave plate WP is an optical element having one or more first regions for producing a phase difference of a half wavelength λ/2 between the incident light and the output light, and one or more second regions having no polarization changing function, in which the one or more first regions and the one or more second regions are formed to be concentric with each other and such that at least one first boundary in the one or more first regions is shared with a corresponding second boundary in the one or more second regions. The wavelength λ of the half wavelength λ/2 is a wavelength λ of the output light from the bandpass filter BPF and is also a wavelength λ of the illumination light illuminating the target object WK.

For example, as illustrated in FIG. 2A, the wave plate WP includes a first second region AR2-1 having a circular shape of a predetermined diameter and for causing no change in polarization between the incident light and the output light, a first region AR1 having an annular shape (ring shape and toroidal shape) formed to surround an outer periphery of the second region AR2-1 and for producing a phase difference of a half wavelength λ/2 between the incident light and the output light, and a second second region AR2-2 having an annular shape (ring shape and toroidal shape) formed to surround an outer periphery of the first region AR1 and for causing no change in polarization between the incident light and the output light. The boundary of the outer periphery of the second region AR2-1 is shared with the boundary of an inner periphery of the first region AR1, and the boundary of the outer periphery of the first region AR1 is shared with the boundary of an inner periphery of the second region AR2-2. The first region AR1 has a predetermined width (first width) in a radial direction. The second region AR2-2 has a predetermined width (second width) in the radial direction. The first width of the first region AR1, the diameter of the second region AR2-1, and the second width of the second region AR2-2 are appropriately designed in accordance with the specification and the like of the illumination light reception device D. The second regions AR2-1 and AR2-2 are made of an appropriate material such as an adhesive or glass having no polarization changing function. For example, a phase difference film having the half wavelength λ/2 is processed into an annular ring shape as the first region AR1, and adhesive layers are formed, as the second regions AR2-1 and AR2-2, inside and outside the first region AR1, thus creating the wave plate WP. The second region AR2-1 may be an air layer filled with air. Alternatively, for example, a phase difference film having the half wavelength λ/2 is processed into an annular ring shape as the first region AR1 and is attached to a disk-shaped glass substrate, thus creating the wave plate WP. In such a wave plate WP, for example, as illustrated in FIG. 2B, when light of a Y polarization component is made incident as incident light, in the first region AR1, light of a Z polarization component is output as output light due to the phase difference of the half wavelength λ/2 being produced, and in the second region AR2-1, the light of the Y polarization component is directly output as output light without the phase difference being produced.

Note that in the example illustrated in FIG. 2A, the wave plate is the wave plate WP having the second region AR2 formed in the central portion thereof and the first region AR1 formed on the outer periphery of the second region AR2. However, as illustrated in FIG. 2C, the wave plate may be a wave plate WPa having the first region AR1 formed in the central portion thereof and the second region AR2 formed on the outer periphery of the first region AR1. In the wave plate WPa illustrated in FIG. 2C, although not illustrated, a second first region may be further formed on the outer periphery of the second region AR2. Additionally, in the wave plate WP illustrated in FIG. 2A, although not illustrated, a second first region may be further formed on the outer periphery of the second region AR2-2. In these above-described examples, the number of the first regions AR1 for producing the phase difference of the half wavelength λ/2 is one or two, but may be any number, and is appropriately designed in accordance with the specification and the like of the illumination light reception device D. Similarly, in the above-described examples, the number of the second regions AR2 for causing no change in polarization is one or two, but may be any number, and is appropriately designed in accordance with the specification and the like of the illumination light reception device D.

The first optical system Gr21 is an objective lens that directs the incident light toward the target object WK disposed on the disposition surface. The first optical system Gr21 will be further described later.

The polarization selection optical element PS is a polarizer that selectively extracts a polarization component in a specific direction from the incident light and outputs the extracted polarization component as output light. For example, the polarization selection optical element PS selectively extracts a polarization component transmitted through the second region AR2, reflected from the target object WK, transmitted through the first region AR1, and having the phase difference of the half wavelength λ/2 produced, and outputs the extracted polarization component as output light. More specifically, the polarization selection optical element PS transmits only the Z polarization component, outputs the Z polarization component as output light, and blocks light of other polarization components.

The light reception element IS is a device that receives the incident light on a predetermined light reception surface and performs photoelectric conversion on the incident light to output an electric signal corresponding to the incident light, and includes, for example, a photodiode, a position detection sensor (PDS), a line sensor, a two-dimensional image sensor, or the like. As the light reception element IS, an appropriate type of sensor is used in accordance with the specification and the like of the illumination light reception device D.

The second optical system Gr22 is an optical system for forming an optical image of the target object WK illuminated with the illumination light on the light reception surface of the light reception element IS together with the first optical system Gr21, and includes one or more lenses.

The light source LS, the first lens L11 of the optical system Gr11, the polarizer PL, the bandpass filter BPF, and the second lens L12 of the optical system Gr11 are disposed, with their respective optical axes aligned with an optical axis (first optical axis) AX1, sequentially in this order along the first optical axis AX1. The bandpass filter BPF and the optical system Gr11 constitute an illumination optical system, and the first optical axis AX1 is an optical axis of the illumination optical system (an optical axis of the illumination unit IL). The light emitted from the light source LS is made incident on the first lens L11 of the optical system Gr11, is converted by the first lens L11 into parallel light to be made incident on the polarizer PL from the first lens L11, is converted by the polarizer PL into a polarization component in a predetermined direction (Y polarization component in the present embodiment) to be made incident on the bandpass filter BPF from the polarizer PL, is converted by the bandpass filter BPF into light of a predetermined wavelength range to be made incident on the second lens L12 of the optical system Gr11, is condensed by the second lens L12 to be output from the second lens L12 of the optical system Gr11 as illumination light of the illumination unit IL.

Note that, the illumination unit IL may include, instead of the light source LS and the polarizer PL, a laser light source that emits a polarization component in a predetermined direction, as the light source LS, and may include the light source LS, the bandpass filter BPF, and the optical system Gr11.

The illumination unit IL including the light source LS, the polarizer PL, the bandpass filter BPF, and the optical system Gr11 is disposed with respect to the beam splitter BS such that the first optical axis AX1 intersects with the inclined surface of the beam splitter BS at 45°. An intersection of the first optical axis AX1 on the inclined surface of the beam splitter BS is preferably a central position of the inclined surface (for example, an intersection position of two diagonals of the inclined surface when the inclined surface is rectangular). Thus, the illumination light output from the illumination unit IL propagates (travels) along the first optical axis AX1 of the illumination unit IL, is made incident on the beam splitter BS, and is deflected by 90° in its propagation direction (traveling direction) on the inclined surface of the beam splitter BS. That is, the first optical axis AX1 in the light source LS, the polarizer PL, the bandpass filter BPF, and the optical system Gr11 is deflected by 90°. The illumination light is reflected by the inclined surface to be converted into illumination light of a polarization component in a predetermined direction (Y polarization component), and propagates along the first optical axis AX1 deflected by 90° on the inclined surface.

The wave plate WP is disposed, with respect to the target object WK, closer to a first position where the light source LS is disposed and closer to a second position where the light reception element IS is disposed. More specifically, in the example illustrated in FIG. 1, the wave plate WP is disposed at a position on an output side from which the illumination light (the illumination light of the polarization component in the predetermined direction) reflected by the inclined surface of the beam splitter BS is output and on an image side (the light reception element IS side) of the first optical system Gr21. The illumination light of the polarization component in the predetermined direction output from the beam splitter BS is made incident on the wave plate WP, in the first region AR1, is output with the phase difference of the half wavelength λ/2 produced, as a polarization component perpendicular to the predetermined direction (Z polarization component in the above-described example), and in the second region AR2-1, is directly output as the polarization component in the predetermined direction (Y polarization component in the above-described example) without the phase difference being produced.

The first optical system Gr21 is disposed closer to a fourth position where the target object WK is disposed than a third position where the wave plate WP is disposed. The illumination light of each polarization component output from the wave plate WP is made incident on the first optical system Gr21 and illuminates the target object WK. The reflected light (first reflected light) from the target object WK is made incident on the first optical system Gr21, is made incident on the wave plate WP through the first optical system Gr21, in the first region AR1, is output with the phase difference of the half wavelength λ/2 produced, and in the second region AR2-1, is directly output without the phase difference being produced. Consequently, when the first reflected light of the illumination light incident on the first region AR1 is made incident on the first region AR1, the first reflected light becomes the same polarization component as the polarization component of the illumination light incident on the first region AR1 (Y polarization component in the above-described example) and is output from the wave plate WP. When the first reflected light of the illumination light incident on the first region AR1 is made incident on the second region AR2-1, the first reflected light becomes a polarization component (Z polarization component in the above-described example) perpendicular to the polarization component of the illumination light incident on the first region AR1 and is output from the wave plate WP. When the first reflected light of the illumination light incident on the second region AR2-1 is made incident on the second region AR2-1, because of without the phase difference being produced even at one time (once), the first reflected light is output from the wave plate WP as the same polarization component (Y polarization component in the above-described example) as the polarization component of the illumination light incident on the first region AR1. The first reflected light of the illumination light transmitted through the wave plate WP is incident on the beam splitter BS, and only the transmission component split at a predetermined split ratio is output.

The polarization selection optical element PS is disposed, with respect to the wave plate WP, closer to the second position where the light reception element IS is disposed than the first position where the light source LS is disposed. More specifically, in the example illustrated in FIG. 1, the polarization selection optical element PS is disposed at a position on an output side from which the first reflected light of the illumination light transmitted through the inclined surface of the beam splitter BS is output and on an object side (the target object WK side) of the second optical system Gr22. The first reflected light output from the beam splitter BS is made incident on the second optical system Gr22, and the optical image of the target object WK (the optical image of the target object WK constituted by the first reflected light of the polarization component perpendicular to the predetermined direction) is formed on the light reception surface of the light reception element IS by the first and second optical systems Gr21 and Gr22. The light reception element IS performs photoelectric conversion, and outputs an electric signal corresponding to the optical image of the target object WK received by the light reception surface. The electric signal output from the light reception element IS is output to an appropriate device (for example, an information processing device such as a computer) that processes the electric signal.

In the present embodiment, the first optical system Gr21, the wave plate WP, the beam splitter BS, the polarization selection optical element PS, the second optical system Gr22, and the light reception element IS are disposed, with their respective optical axes aligned with an optical axis (second optical axis) AX2, sequentially in this order from the object side to the image side along the second optical axis AX2. The first optical system Gr21 and the second optical system Gr22 constitute an imaging optical system that forms the optical image of the target object WK illuminated with the illumination light, and the second optical axis AX2 is an optical axis of the imaging optical system. The imaging optical system and the illumination optical system are disposed such that the first optical axis AX1 of the illumination optical system and the second optical axis AX2 of the imaging optical system are perpendicular to each other on the inclined surface of the beam splitter BS, and since the first optical axis AX1 of the illumination optical system is deflected by 90° on the inclined surface of the beam splitter BS, the first optical axis AX1 of the illumination optical system and the second optical axis AX2 of the imaging optical system are coaxial with each other. Here, the first position of the light source LS can be regarded as a position on the inclined surface where the first optical axis AX1 of the illumination optical system intersects with the second optical axis AX2 of the imaging optical system.

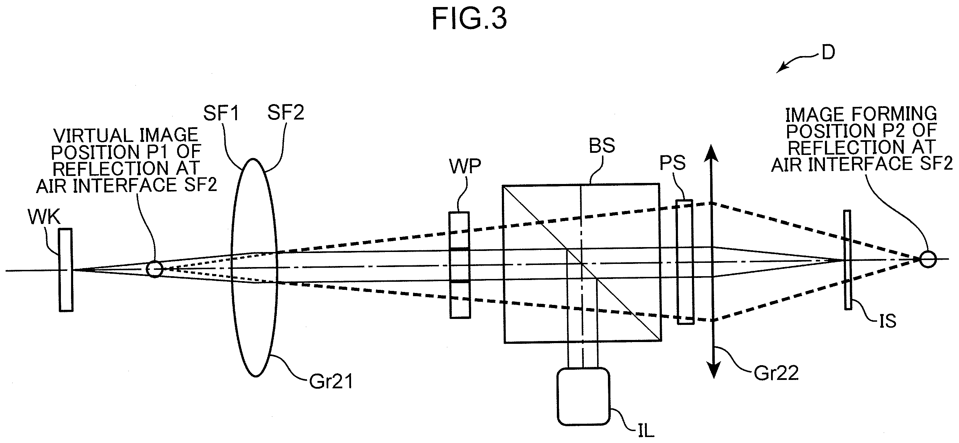

Here, in the present embodiment, the first optical system Gr21 includes one or more lenses formed in a curvature radius (= 1/curvature) of an air interface such that an image of reflected light (second reflected light) at the air interface that is a boundary with air is formed at a position shifted from an image forming position of the imaging optical system. More specifically, the first optical system Gr21 includes one or more lenses formed in a curvature radius smaller than a curvature radius of an air interface such that an image of the second reflected light at the air interface is formed at the image forming position of the imaging optical system at the wavelength of the illumination light. To be more specific, for example, as illustrated in FIG. 3, the first optical system Gr21 includes one or more lenses formed in a curvature radius of an air interface such that a virtual image of the second reflected light at the air interface is located between the target object WK and the first optical system Gr21 at the wavelength of the illumination light. In the example illustrated in FIG. 3, the air interface of the first optical system Gr21 is two in number. In other words, the first optical system Gr21 includes one lens. As illustrated in FIG. 1, the one lens includes a cemented lens formed by cementing two first and second lenses L21 and L22 to each other.

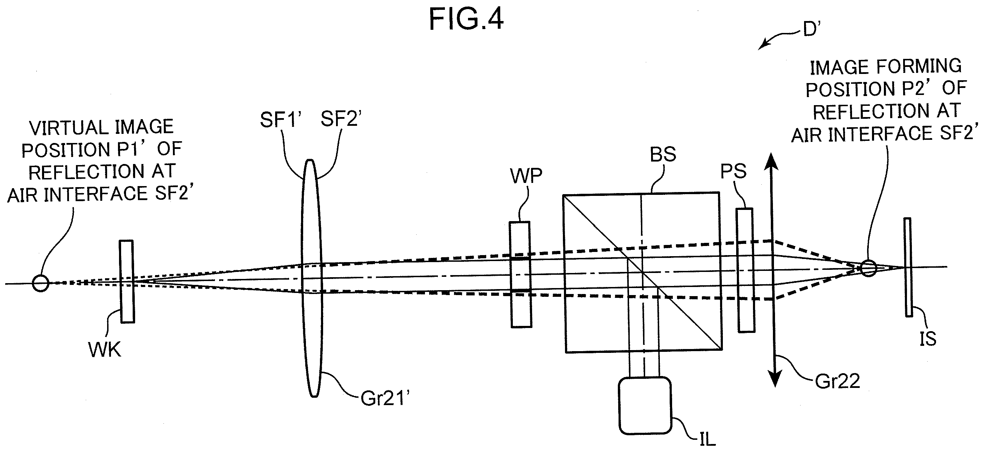

FIG. 3 is a diagram for describing actions and effects of the illumination light reception device. FIG. 4 is a diagram for describing a comparative example.

An illumination light reception device D' of the comparative example illustrated in FIG. 4 has the same configuration as the configuration of the illumination light reception device D according to the above-described embodiment except that the illumination light reception device D' includes, instead of the first optical system Gr21, a first optical system Gr21' including one lens with a curvature radius of an air interface being relatively large. In such an illumination light reception device D' of the comparative example, at the wavelength of the illumination light, a virtual image by an air interface SF2' on the image side in the lens of the first optical system Gr21' is formed at a position P1' outward from the target object WK (on a side farther than the target object WK from the first optical system Gr21'), and on the light reception surface of the light reception element IS, the image forming position of the imaging optical system, which is constituted by the first optical system Gr21' and the second optical system Gr22 is close to the image forming position of the second reflected light at the air interface SF2'. Consequently, in the illumination light reception device D' of the comparative example, a relatively bright region (hot spot) of the second reflected light at the air interface SF2' is generated on the light reception surface of the light reception element IS, and noise is generated. As a result, the SN ratio in the light reception element IS decreases.

On the other hand, in the illumination light reception device D according to the present embodiment, the first optical system Gr21 includes one or more lenses formed in the curvature radius of the air interface such that the virtual image of the second reflected light at the air interface is located between the target object WK and the first optical system Gr21 at the wavelength of the illumination light. In the example illustrated in FIG. 3, the first optical system Gr21 includes one lens formed in a curvature radius of an air interface SF2 on the image side such that a virtual image of the second reflected light at the air interface SF2 on the image side is located between the target object WK and the first optical system Gr21 at the wavelength of the illumination light. In such an illumination light reception device D, at the wavelength of the illumination light, the virtual image by the air interface SF2 on the image side in the lens of the first optical system Gr21 is formed at a position P1 between the target object WK and the first optical system Gr21, and on the light reception surface of the light reception element IS, the image forming position of the second reflected light at the air interface SF2 is a position P2 outward from the light reception surface of the light reception element IS (on a side farther than the light reception surface of the light reception element IS from the first optical system Gr21). Consequently, in the illumination light reception device D according to the embodiment, the image of the second reflected light at the air interface SF2 is blurred without being formed on the light reception surface of the light reception element IS, and the hot spot is reduced. As a result, the SN ratio in the light reception element IS can be improved.

Additionally, as can be seen from the above-described description, the optical system located closer to the object side than the polarization selection optical element PS greatly affects the generation of the hot spot, and the optical system located closer to the image side than the polarization selection optical element PS hardly affects the generation of the hot spot. In the present embodiment, the first optical system Gr21 greatly affects the generation of the hot spot, and the second optical system Gr22 hardly affects the generation of the hot spot.

Note that in the present embodiment, the bandpass filter BPF and the optical system Gr11 correspond to an example of the illumination optical system that illuminates the predetermined target object by using light emitted from the light source as illumination light. The first optical system Gr21 and the second optical system Gr22 correspond to an example of the imaging optical system that forms the optical image of the target object on the light reception surface of the light reception element.

As described above, since the illumination light reception device D according to the present embodiment does not use the specific polarizing element, and instead of the specific polarizing element, uses the wave plate WP having the first region AR1 and the second region AR2, reflected light generated inside the specific polarizing element cannot be generated. Thus, the SN ratio in the light reception element IS can be improved.

In the illumination light reception device D, since the first optical system Gr21 includes the one or more lenses formed in the curvature radius of the air interface such that the image of the second reflected light at the air interface is formed at the position shifted from the image forming position of the imaging optical system, the image of the second reflected light is not formed on the light reception surface of the light reception element IS. Thus, the SN ratio in the light reception element IS can be improved.

In the illumination light reception device D, when the air interface of the first optical system Gr21 is two in number, since the air interface of the first optical system Gr21 is minimized in number, the second reflected light at the air interface can be minimized. Thus, the SN ratio in the light reception element IS can be improved. Since the optical power is concentrated at the two air interfaces, the curvature radius of the air interface is easily reduced, and the blur of the second reflected light on the light reception surface is easily increased.

The illumination light reception device D includes the first and second optical systems Gr21 and Gr22, the first optical system Gr21 blurs the second reflected light on the light reception surface of the light reception element IS, and the first and second optical systems Gr21 and Gr22 form the optical image of the target object WK on the light reception surface of the light reception element IS while removing aberrations of the first and second optical systems Gr21 and Gr22. Thus, the SN ratio in the light reception element IS can be improved.

Note that in the above-described embodiment, the imaging optical system has a more remarkable improvement effect when the magnification is 0.5 times or less. For example, when the irradiance is 1 [W/mm²] at a magnification of 1 time, the target object WK is a perfect scatterer having a reflectance of 100[%], and an effective F number of the imaging optical system is 2.0 (that is, a numerical aperture NA = 0.25), energy that can be taken in by the imaging optical system is 0.25² = 0.0625, and only about 6[%] of the first reflected light of the target object WK (optical image of the target object WK) reaches the light reception surface of the light reception element IS. Furthermore, when the magnification is low (for example, 0.5 times), the irradiance decreases in proportion to the square of the magnification, and thus, only about 2[%] of the first reflected light of the target object WK (optical image of the target object WK) reaches the light reception surface of the light reception element IS. If the stray light generated in the first optical system Gr21 and the wave plate WP is 1[%], this corresponds to half of about 2[%] described above, and thus, the SN ratio in the light reception element IS greatly decreases. In this respect, in the above-described embodiment, since the stray light component can be reduced, the SN ratio can be improved, and particularly when the magnification is 0.5 times or less, a more remarkable improvement effect is obtained.

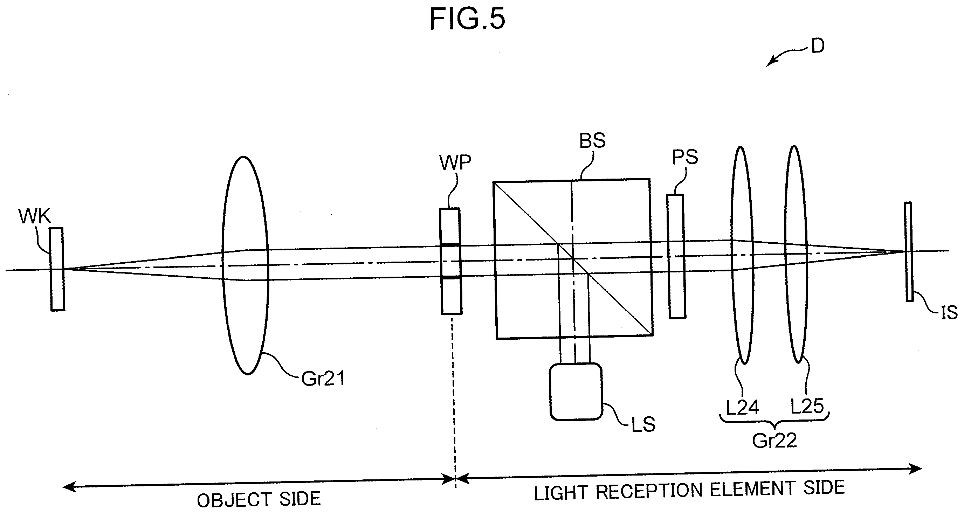

Furthermore, in the above-described embodiment, the second optical system Gr22 preferably includes a plurality of lenses so as to have four or more air interfaces. FIG. 5 is a diagram for describing a modified embodiment of the illumination light reception device. For example, as illustrated in FIG. 5, the second optical system Gr22 includes two lenses L24 and 25 and has four air interfaces. Since such an illumination light reception device D has many air interfaces, aberration correction and the like are easily performed, and resolving power is easily improved. Thus, the optical performance of the illumination light reception device D can be improved.

Furthermore, in the above-described embodiment, the second optical system Gr22 may be a variable magnification optical system that varies a focal length. Alternatively, the second optical system Gr22 may be any one of a plurality of image forming optical systems having different focal lengths prepared in advance. In such an illumination light reception device D, since the magnification can be changed by the second optical system Gr22, the second reflected light can be received through the change of magnification while maintaining actions and effects of blurring, by the first optical system Gr21, the second reflected light on the light reception surface of the light reception element IS.

Additionally, the illumination light reception device D according to the above-described embodiment can be applied in various ways. For example, as disclosed in Patent Literature 1, the illumination light reception device D can be applied to surface observation and defect observation in bulk. In the surface observation, the illumination light reception device D can be applied to measurement of inclination and waviness, measurement of contaminations such as defects, particles, and the like, measurement of a minute step formed by micropatterning, measurement of roughness, and the like. In the defect observation in the bulk, the illumination light reception device D can be applied to observation of bubbles and the like in glass, detection of a non-uniform portion of a refractive index, for example, due to distortion, and the like.

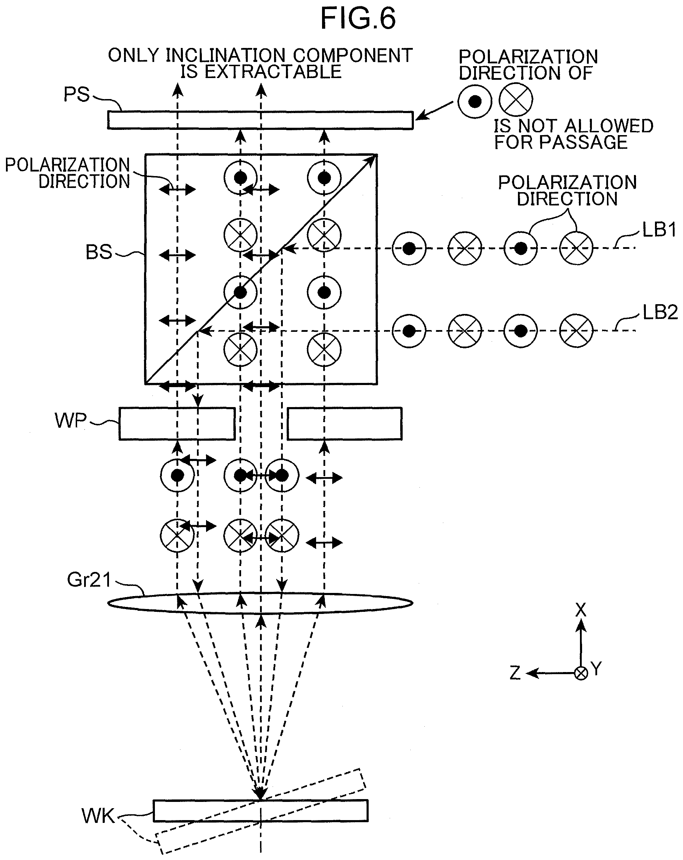

As an example, measurement of the inclination of the target object WK will be described. FIG. 6 is a diagram for describing, as an example, application of the illumination light reception device to an inclination measuring device. FIG. 6 illustrates the polarization selection optical element PS, the beam splitter BS, the wave plate WP, the first optical system Gr21, and the target object WK, and omits the illustration of the remaining constituent components.

In FIG. 6, in a case where the target object WK is a plate-like body having flat planar front and back surfaces, as indicated by a solid line, when the target object WK is disposed horizontally on the disposition surface and is not inclined, the illumination light of the Y polarization component and the reflected light of the illumination light reflected from the target object WK cannot be transmitted through the polarization selection optical element PS, and thus do not reach the light reception element IS and are not received by the light reception surface of the light reception element IS. On the other hand, as indicated by a broken line, when the target object WK is inclined, the illumination light of the Y polarization component and the reflected light of the illumination light reflected from the target object WK partially become the Z polarization component, are transmitted through the polarization selection optical element PS, and reach the light reception element IS, and thus, are received by the light reception surface of the light reception element IS. For example, illumination light LB1 emitted from the illumination unit IL is reflected by the beam splitter BS, is transmitted through the second region AR2-1 of the wave plate WP, is made incident on the inclined target object WK through the first optical system Gr21, and is reflected from the inclined target object WK. The first reflected light of the illumination light LB1 is made incident on the first region AR1 of the wave plate WP through the first optical system Gr21, becomes the Z polarization component with the phase difference of the half wavelength λ/2 produced, and is made incident on the beam splitter BS from the wave plate WP. The first reflected light of the Z polarization component is transmitted through the beam splitter BS to be made incident on the polarization selection optical element PS, is transmitted through the polarization selection optical element PS since the polarization selection optical element PS is set to transmit the Z polarization component, and reaches the light reception surface of the light reception element IS through the second optical system Gr22. For example, the illumination light LB2 emitted from the illumination unit IL is reflected by the beam splitter BS, is made incident on the first region AR1 of the wave plate WP, becomes the Z polarization component with the phase difference of the half wavelength λ/2 produced, is made incident on the inclined target object WK from the wave plate WP through the first optical system Gr21, and is reflected from the inclined target object WK. The first reflected light of the illumination light LB2 is made incident on the second region AR2-1 of the wave plate WP through the first optical system Gr21 and is made incident on the beam splitter BS from the wave plate WP. The first reflected light of the Z polarization component is transmitted through the beam splitter BS to be made incident on the polarization selection optical element SP, is transmitted through the polarization selection optical element PS, and reaches the light reception surface of the light reception element IS through the second optical system Gr22. When the target object WK is inclined as described above, the Z polarization component of part of the first reflected light reaches the light reception surface of the light reception element IS, and an electric signal corresponding to the Z polarization component is output from the light reception element IS. The inclination of the target object WK can be detected by detecting the electric signal using the information processing device or the like. The inclination angle of the target object WK can be measured by associating the magnitude and the inclination angle of the electric signal in advance.

The present specification discloses the techniques according to the various aspects as described above, of which main techniques will be summarized below.

An illumination light reception device according to an aspect includes: a wave plate having one or more first regions for producing a phase difference of a half wavelength and one or more second regions having no polarization changing function; a polarization selection optical element that selectively extracts and outputs a polarization component in a specific direction; a light reception element that receives light on a predetermined light reception surface; a light source that emits light; an illumination optical system that illuminates a predetermined target object by using light emitted from the light source as illumination light; and an imaging optical system that forms an optical image of the target object on the light reception surface of the light reception element. In the wave plate, the one or more first regions and the one or more second regions are formed to be concentric with each other and such that at least one first boundary in the one or more first regions is shared with a corresponding second boundary in the one or more second regions. The wave plate is disposed, with respect to the target object, closer to a first position where the light source is disposed and closer to a second position where the light reception element is disposed. The polarization selection optical element is disposed, with respect to the wave plate, closer to the second position than the first position. A first optical axis of the illumination optical system and a second optical axis of the imaging optical system are coaxial with each other.

Since such an illumination light reception device does not use the specific polarizing element, and instead of the specific polarizing element, uses the wave plate having the first region and the second region, reflected light generated in the specific polarizing element cannot be generated. Thus, the SN ratio in the light reception element can be improved.

In another aspect, in the illumination light reception device according to the above-described aspect, the imaging optical system has a magnification of 0.5 times or less.

Since such an illumination light reception device uses the imaging optical system having the magnification of 0.5 times or less, the SN ratio in the light reception element can be suitably improved.

In another aspect, in the illumination light reception device according to the above-described aspects, the imaging optical system includes a first optical system disposed closer to a fourth position where the target object is disposed than a third position where the wave plate is disposed, and the first optical system includes one or more lenses formed in a curvature radius of an air interface such that an image of reflected light at the air interface that is a boundary with air is formed at a position shifted from an image forming position of the imaging optical system. Preferably, in the illumination light reception device according to the above-described aspect, the first optical system includes one or more lenses formed in a curvature radius of an air interface such that a virtual image of the reflected light at the air interface is located between the target object and the first optical system.

In such an illumination light reception device, since the first optical system includes the one or more lenses formed in the curvature radius of the air interface such that the image of the reflected light at the air interface is formed at the position shifted from the image forming position of the imaging optical system, the image of the reflected light is not formed on the light reception surface of the light reception element. Thus, the SN ratio in the light reception element can be improved.

In another aspect, in the illumination light reception device according to the above-described aspect, the air interface of the first optical system is two in number. Preferably, in the illumination light reception device according to the above-described aspect, the first optical system includes one lens (including a cemented lens) formed in a curvature radius of an air interface on the image side such that a virtual image of the reflected light at the air interface on the image side is located between the target object and the first optical system at the wavelength of the illumination light.

In such an illumination light reception device, since the air interface of the first optical system is minimized in number, the reflected light at the air interface can be minimized. Thus, the SN ratio in the light reception element can be improved.

In another aspect, in the illumination light reception device according to the above-described aspect, the imaging optical system includes a second optical system disposed closer to the second position than the third position, and the imaging optical system forms the optical image of the target object on the light reception surface of the light reception element by the first and second optical systems. Preferably, in the illumination light reception device according to the above-described aspect, the second optical system includes a plurality of lenses so as to have four or more air interfaces.

Such an illumination light reception device includes first and second optical systems, the first optical system blurs the reflected light on the light reception surface of the light reception element, and the first and second optical systems form the optical image of the target object on the light reception surface of the light reception element while removing aberrations of the first and second optical systems. Thus, the SN ratio in the light reception element can be improved.

In another aspect, in the illumination light reception device according to the above-described aspect, the imaging optical system includes a second optical system disposed closer to the second position than the third position, and the second optical system is a variable magnification optical system that varies a focal length or any one of a plurality of image forming optical systems having different focal lengths prepared in advance.

Since such an illumination light reception device includes the first and second optical systems and the magnification can be changed by the second optical system, the reflected light can be received through the change of magnification while maintaining actions and effects of blurring, by the first optical system, the reflected light on the light reception surface of the light reception element.

This application is based on Japanese Patent Application No. 2022-189415 filed on November 28, 2022, the contents of which are incorporated herein.

Although the present invention has been appropriately and sufficiently described through the embodiments with reference to the drawings in the above-described description to express the present invention, it should be recognized that a person skilled in the art can easily change and/or improve the above-described embodiments. Therefore, unless a change or improvement made by a person skilled in the art is at a level departing from the scope of rights of the claims described in claims, the change or improvement is interpreted to be included in the scope of rights of the claims.

### Industrial Applicability

According to the present invention, it is possible to provide an illumination light reception device that illuminates a predetermined target object and receives reflected light from the predetermined target object.

## Claims

1. An illumination light reception device comprising:
a wave plate having one or more first regions for producing a phase difference of a half wavelength and one or more second regions having no polarization changing function;
a polarization selection optical element that selectively extracts and outputs a polarization component in a specific direction;
a light reception element that receives light on a predetermined light reception surface;
a light source that emits light;
an illumination optical system that illuminates a predetermined target object by using light emitted from the light source as illumination light; and
an imaging optical system that forms an optical image of the target object on the light reception surface of the light reception element, wherein
in the wave plate, the one or more first regions and the one or more second regions are formed to be concentric with each other and such that at least one first boundary in the one or more first regions is shared with a corresponding second boundary in the one or more second regions,
the wave plate is disposed, with respect to the target object, closer to a first position where the light source is disposed and closer to a second position where the light reception element is disposed,
the polarization selection optical element is disposed, with respect to the wave plate, closer to the second position than the first position, and
a first optical axis of the illumination optical system and a second optical axis of the imaging optical system are coaxial with each other.

2. The illumination light reception device according to claim 1, wherein
the imaging optical system has a magnification of 0.5 times or less.

3. The illumination light reception device according to claim 1 or 2, wherein
the imaging optical system includes a first optical system disposed closer to a fourth position where the target object is disposed than a third position where the wave plate is disposed, and
the first optical system includes one or more lenses formed in a curvature radius of an air interface such that an image of reflected light at the air interface that is a boundary with air is formed at a position shifted from an image forming position of the imaging optical system.

4. The illumination light reception device according to claim 3, wherein
the air interface of the first optical system is two in number.

5. The illumination light reception device according to claim 3, wherein
the imaging optical system includes a second optical system disposed closer to the second position than the third position, and
the imaging optical system forms the optical image of the target object on the light reception surface of the light reception element by the first and second optical systems.

6. The illumination light reception device according to claim 3, wherein
the imaging optical system includes a second optical system disposed closer to the second position than the third position, and
the second optical system is a variable magnification optical system that varies a focal length or any one of a plurality of image forming optical systems having different focal lengths prepared in advance.
